Europäisches Patentamt

European Patent Office

Office européen des brevets

(19)

(11) Publication number: **0 094 817**
A2

(12) # EUROPEAN PATENT APPLICATION

(21) Application number: **83302738.6**

(22) Date of filing: **16.05.83**

(51) Int. Cl.³: **B 60 R 1/06**

(30) Priority: **17.05.82 GB 8214232**

(43) Date of publication of application:
**23.11.83 Bulletin 83/47**

(84) Designated Contracting States:
**DE FR GB IT SE**

(71) Applicant: **BRITAX (WINGARD) LIMITED**
**Chandler Road**
**Chichester Sussex, PO19 2UG(GB)**

(72) Inventor: **Pond, Brian**
**32 Sturcombe Avenue**
**Roselands Park Paignton Devon TQ4 7EB(GB)**

(74) Representative: **Hollinghurst, Antony**
**Britax Central Services 40 Granby Avenue**
**Garretts Green Birmingham, B33 OSJ(GB)**

(54) Apparatus for adjusting the orientation of rear-view vehicle mirrors.

(57) In order to adjust the near-side rear-view mirror (14) of an articulated vehicle combination comprising a tractor (10) and a trailer (12), a retractor (34) is mounted at the rear centre of the cab of the tractor (10). A lanyard (32) is wound on the retractor (34) and has its free end connected to the front right-hand corner (36) of the trailer (12). Thus, when the tractor (10) turns to the left, more of the lanyard (32) is drawn off the retractor (34) and this is used to cause a corresponding movement of the mirror (14) so as to keep the rear left-hand corner of the trailer (12) within the field of view of the mirror (14).

FIG. 3

EP 0 094 817 A2

0094817

- 1 -

<u>Apparatus for Adjusting the Orientation of Rear-View Vehicle Mirrors</u>

This invention relates to apparatus for adjusting the orientation of rear-view mirrors of vehicle combinations comprising a tractor and a trailer.

When negotiating a turn to the near-side with a vehicle of the foregoing type, it is difficult for the driver to see the near-side rear corner of the trailer. This is because the setting of the near-side mirror necessary for straight ahead driving causes it to be directed against the side of the trailer when a turn to the near-side is being made.

Various proposals have been made for overcoming this problem by providing apparatus for adjusting the orientation of a rear view mirror of a vehicle combination of the foregoing type, the apparatus comprising sensing means for detecting movement of one part of the vehicle relative to another part thereof and control means responsive to the sensing means for varying the orientation of the mirror. For example Patent Specification GB-A-1414373 discloses apparatus of the foregoing type in which the sensing means is linked to the steering gear of the tractor, the control means being connected to the sensing means by mechanical linkages. However, although changes in orientation of the tractor and the trailer are linked to movement of the steering gear, they are not directly related, movement of the steering gear inevitably taking place before the resulting relative movement between the tractor and the trailer.

According to the invention, in apparatus for adjusting the orientation of a rear-view mirror of a vehicle combination comprising a tractor and a trailer, having sensing means for detecting movement of one part of the vehicle relative to another part thereof and control means responsive to the sensing means for varying the orientation of the mirror, the sensing means is adapted to be responsive to changes in the orientation of the trailer relative to the tractor.

In one form of the invention, the sensing means is adapted to actuate the control means so that the latter effects a single movement of the mirror through a predetermined angle when the angle between the tractor and the trailer crosses a threshold value. Alternatively, the sensing means may be arranged to cause angular movement of the mirror in proportion to the relative angular movement between the tractor and trailer so that, over a predetermined range, the rear corner of the trailer remains in a reasonably constant position in the field of view of the mirror. With the latter arrangement, it is preferable to inhibit very small changes in the relative orientation of the tractor and trailer from causing changes in the orientation of the mirror so as to prevent oscillation of the latter.

The sensing means may be incorporated into the coupling between the tractor and trailer. However, this is frequently a very hostile environment in which the apparatus would be subject to contamination by dirt and grease. It will therefore frequently be preferable to arrange for the sensing means to comprise apparatus responsive to changes in distance between a point on the tractor and a point on the trailer.

It should be understood that the invention is equally applicable to so called articulated vehicles in which the trailer is close-coupled to the tractor, draw bar tractor-and-trailer combinations in which a substantial proportion of the payload is carried by the tractor and caravans towed by passenger motor cars.

Embodiments of the invention will now be described, by way of example, with reference to the accompanying drawings, in which:

Figure 1 is a schematic plan view illustrating the field of view of a conventional rear-view mirror fitted to an articularted vehicle;

Figure 2 is a plan view similar to Figure 1 illustrating the field of view of a mirror on an articulated vehicle equipped with apparatus in accordance with the invention;

Figure 3 is a schematic plan view, on an enlarged scale illustrating one form of sensor fitted to the vehicle shown in Figure 2; and

Figure 4 is a cross-sectional view of part of a sensor shown in Figure 3.

The drawings illustrate the invention applied to a right-hand-drive vehicle in which the near-side is the left-hand side.

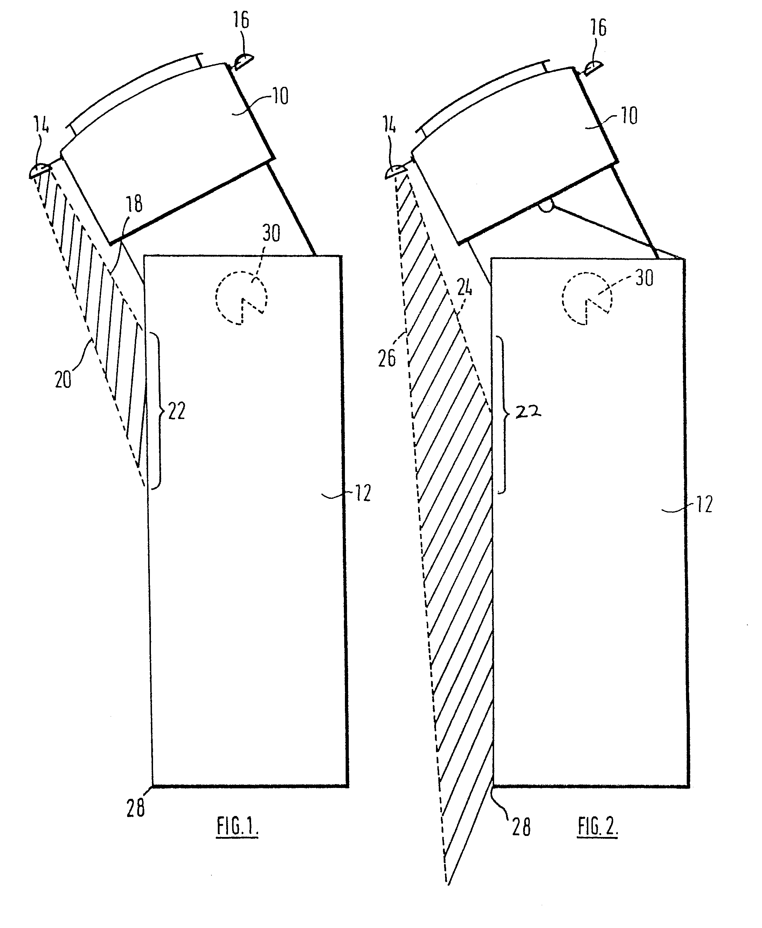

Figure 1 illustrates an articulated commercial vehicle comprising a tractor 10 and a trailer 12. The tractor 10 is equipped with near and off-side exterior rear-view mirrors 14 and 16. The mirrors 14 and 16 are set for straight ahead driving. Consequently, the right-hand side of the field of view of the left-hand mirror 14 is bounded by a line 18 substantially parallel to the longitudinal centre line of the tractor 10. The left-hand side of the field of view is bounded by a line 20, with the result that the entire field of view is occupied by a zone 22 on the side of the trailer 12.

Turning to Figure 2, if the mirror 14 is pivoted through a relatively small angle, the field of view moves to a zone bounded by the lines 24 and 26, the zone including the rear left-hand corner 28 of the trailer 12. As can be seen from Figure 2, the field of view of the mirror 14 when bounded by the lines 24 and 26 overlaps the zone 22. Consequently, if the mirror 14 has two stable positions, as illustrated in Figures 1 and 2 respectively, the rear corner 28 can be kept within the field of view over the range of angles between the tractor 10 and the trailer 12 encountered in normal driving conditions.

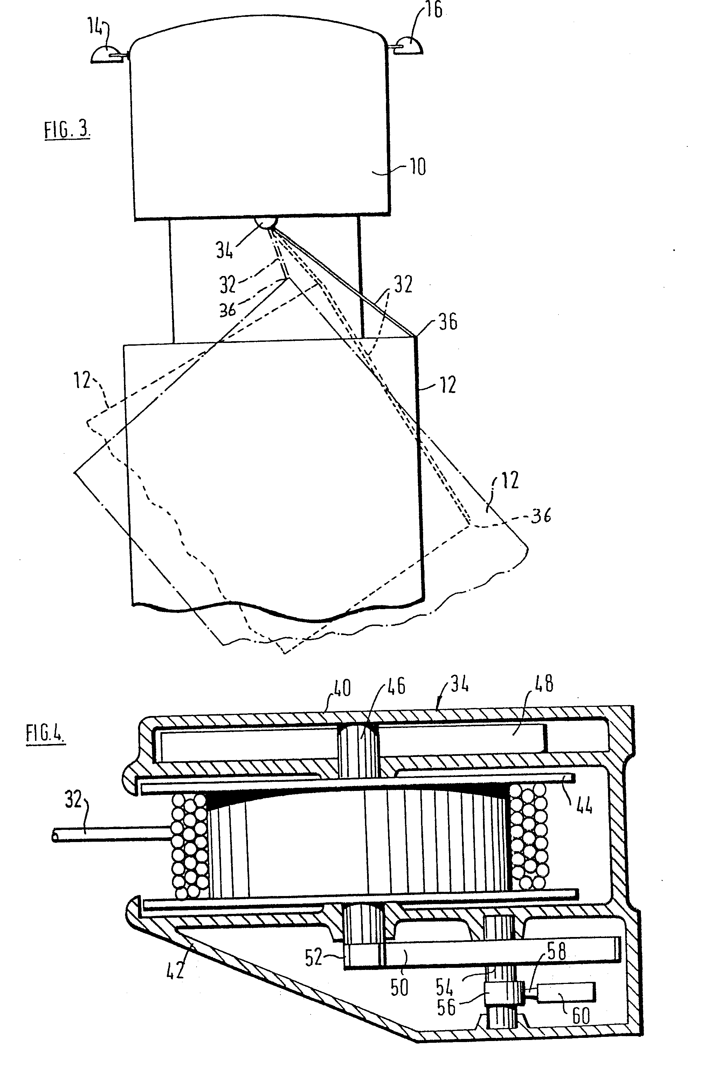

A sensor to control the variation of the orientation of the mirror 14 may be incorporated into the "fifth wheel" coupling 30 between the tractor 10 and the trailer 12. However, since a sensor located in this region would be subject to substantial contamination from grease and dirt, it is preferable to locate the sensor elsewhere. Figure 3 illustrates a sensor comprising a lanyard 32 having one end connected to a retractor 34 mounted centrally on the back of the cab of the tractor 10 and the other end attached to the front right-hand corner 36 of the trailer 12. Thus, when the tractor 10 and trailer 12 are in line with one another, the trailer 12 and the lanyard 32 are in the position illustrated in solid lines.  When a left-hand turn is being made, the trailer 12 takes up the position illustrated in dotted lines and more of the lanyard 32 is drawn off the retractor 34.  On the other hand, when a right-hand turn is being made, the trailer takes up the position shown in chain-dotted lines and more of the lanyard 32 is wound on to the retractor 34.

Turning to Figure 4, the retractor 34 comprises a U-shaped frame having upper and lower side limbs 40 and 42 with a drum 44 journaled on a vertical axis 46 extending between the two limbs 40 and 42.  The upper limb 40 includes a housing for a retraction spring 48 while the lower limb 42 includes a housing for a reduction gear 50 which engages with a pinion 52 on the shaft 46.  Connected to the shaft 54 of the reduction gear 50 is a cam 56 which is engaged by a follower 58 forming the operating member of a microswitch 60. The ratio of the reduction gear wheel 50 to the pinion 52 is such that angular movement of the trailer 12 relative to the tractor 10 causes substantially the same angular movement of the shaft 54 and the cam 56.  The cam 56 has two sections of basically uniform but differing radius with a discontinuity therebetween at the angular orientation corresponding to the relative orientation between the tractor 10 and the trailer 12 at which the rear corner 28 of the trailer is at the extreme left-hand side of the field of view of the mirror 14.  Actuation of the microswitch 60 at this transition is arranged to operate control means (not shown) to pivot the mirror 14 into the orientation illustrated in Figure 2.  If further deflection of the mirror 14 is required, for example to cope with the situation which may arise during low speed manoeuvring when the tractor 10 is substantially at right-angles to the trailer 12, a manual switch may be provided for actuation by the driver to initiate such further angular movement.  Alternatively, such further angular movement may be effect automatically by replacing the cam 56 and micro-switch 60 by a potentiometer or a shaft position encoder giving an analogue or digital representation, respectively, of the angular position of the shaft 54.

In order to prevent oscillation of the mirror, it is necessary either to provide some mechanical lost motion between the gear wheel 50 and the shaft 54 or to achieve the same result electrically in the control means.

The drive means for varying the orientation of the mirror 14 may be as described in Patent Specification FR-A-2454935.

CLAIMS

1.      Apparatus for adjusting the orientation of a rear-view mirror for a vehicle combination comprising a tractor (10) and a trailer (12) having sensing means (34) for detecting movement of one part of the vehicle relative to another part thereof and control means responsive to the sensing means for varying the orientation of the mirror (14), characterised in that the sensing means (34) is adapted to be responsive to changes in the orientation of the trailer (12) relative to the tractor (10).

2.      Apparatus according to claim 1, characterised in that the sensing means (34) is adapted to cause a single movement of the mirror through a predetermined angle when the angle between the tractor (10) and the trailer (12) crosses a threshold value.

3.      Apparatus according to claim 1, characterised in that the sensing means (34) is adapted to cause angular movement of the mirror (14) in proportion to the relative angular movement between the tractor (10) and the trailer (12) over a predetermined range.

4.      Apparatus according to claim 1, 2 or 3, characterised by means for inhibiting changes in the orientation of the mirror (14) in response to changes in the relative orientation of the tractor (10) and trailer (12) less than a predetermined value.

5.      Apparatus according to any preceding claim, characterised in that the sensing means is incorporated in the coupling between the tractor (10) and the trailer (12).

6.      Apparatus according to any of claims 1 to 4, characterised in that the sensing means is arranged to be responsive to changes in the distance between a point (34) on the tractor (10) and a point (36) on the trailer (12).

7.      Apparatus according to claim 6, characterised in that the sensing means comprises a drum (44) mounted at one of said points (34, 36) and having a lanyard (32) wound thereon with its free end connected to the other of said points (34, 36), a spring (48) tending to wind the lanyard (32) on to the drum (44) and means (56, 60) for producing a signal in response to angular movement of the drum (44).

FIG.1.

FIG.2.

0094817

FIG. 3.

FIG. 4.